(19) **Europäisches Patentamt / European Patent Office / Office européen des brevets**

(11) **EP 2 790 907 B1**

(12) **FASCICULE DE BREVET EUROPEEN**

(45) Date de publication et mention de la délivrance du brevet:
**31.05.2017 Bulletin 2017/22**

(21) Numéro de dépôt: **12809720.1**

(22) Date de dépôt: **14.12.2012**

(51) Int Cl.:
**B29D 30/06** *(2006.01)*

(86) Numéro de dépôt international:
**PCT/EP2012/075517**

(87) Numéro de publication internationale:
**WO 2013/087829 (20.06.2013 Gazette 2013/25)**

(54) **ELEMENT MOULANT COMPORTANT DES MOYENS DE DECOUPE POUR LE MOULAGE ET LA VULCANISATION D'UNE BANDE DE ROULEMENT D'UN PNEUMATIQUE**

**FORMTEIL MIT SCHNEIDEMITTELN ZUM FORMEN UND VULKANISIEREN EINER REIFENLAUFFLÄCHE**

**MOULDING ELEMENT COMPRISING CUTTING MEANS, FOR MOULDING AND CURING A TREAD OF A TYRE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2011 FR 1161760**

(43) Date de publication de la demande:
**22.10.2014 Bulletin 2014/43**

(73) Titulaires:
- **Compagnie Générale des Etablissements Michelin**
  **63000 Clermont-Ferrand (FR)**
- **MICHELIN Recherche et Technique S.A.**
  **1763 Granges-Paccot (CH)**

(72) Inventeurs:
- **DUVERNIER, Marc**
  **F-63040 CLERMONT-FERRAND Cedex 9 (FR)**
- **ABAD, Vincent**
  **F-63040 CLERMONT-FERRAND Cedex 9 (FR)**
- **PERRIN, Frédéric**
  **F-63040 CLERMONT-FERRAND Cedex 9 (FR)**
- **CUSTODERO, Emmanuel**
  **F-63040 CLERMONT-FERRAND Cedex 9 (FR)**

(74) Mandataire: **Demaure, Pierre-Yves**
**Manufacture Française**
**des Pneumatiques Michelin**
**23, place des Carmes - Déchaux**
**DGD/PI - F35 - Ladoux**
**63040 Clermont-Ferrand Cedex 9 (FR)**

(56) Documents cités:
| | |
|---|---|
| WO-A1-03/089257 | WO-A1-2006/069912 |
| GB-A- 1 124 915 | US-A- 3 012 599 |
| US-A- 3 415 923 | US-A- 3 432 888 |
| US-A- 4 553 918 | US-A- 6 044 882 |

EP 2 790 907 B1

## Description

DOMAINE DE L'INVENTION

La présente invention concerne le domaine des moules pour le moulage et la vulcanisation d'une bande de roulement d'un pneumatique. Plus particulièrement, l'invention concerne les moules aptes à mouler dans la bande de roulement des rainures recouvertes partiellement ou en totalité par une couche de recouvrement.

ETAT DE LA TECHNIQUE

Des moules comportant des éléments moulantes pour le moulage de découpures dans la bande de roulement de pneumatiques sont bien connus des documents US4553918, US3415923, US3432888 et US3012599.

Il est également connu de concevoir des pneumatiques dont la bande de roulement comprend différents mélanges de caoutchouc. Le document WO 03089257 divulgue de telles bandes de roulement. Plus particulièrement le document WO 03089257 divulgue une bande de roulement comportant des rainures dont les parois sont recouvertes par une couche de recouvrement. Le matériau constituant cette couche est différent du mélange de caoutchouc constituant la bande de roulement. Ce matériau présente notamment une adhérence sur sol mouillé bien supérieure à l'adhérence sur sol mouillé du mélange de caoutchouc. Ceci permet d'améliorer très sensiblement les performances en régime de virage sur sol mouillé.

Un mode de fabrication de cette bande de roulement est notamment divulgué dans le document WO 2006069912. Selon ce mode de fabrication, dans une première étape, il est prévu d'injecter sous forme d'un ou plusieurs inserts le matériau destiné à constituer une couche de recouvrement dans l'ébauche crue à l'aide d'une buse d'injection. Le ou les inserts sont ensuite mis en forme, dans une seconde étape, par des cordons d'un moule de vulcanisation pour recouvrir tout ou partie des parois des rainures moulées par ces cordons.

Ce mode de fabrication connaît quelques limites, en particulier pour obtenir des moulages de précision. En effet au cours de sa mise en forme, l'insert subi un effort de cisaillement important de la part du cordon en vue de transformer cet insert en une couche d'épaisseur réduite. Cet effort de cisaillement peut générer des fissures au sein de l'insert ce qui rend plus difficile la maîtrise des mouvements du matériau composant cet insert. La forme et l'épaisseur de la couche de recouvrement ainsi formée peuvent alors être aléatoires. Les avantages apportés par la couche supplémentaire sur le fonctionnement du pneumatique sont alors réduits.

De plus dans ce mode de fabrication, il est nécessaire de faire correspondre les inserts avec les cordons. Ceci rend alors plus complexe la fabrication de la bande de roulement.

Il existe donc un besoin pour améliorer la mise en place d'une couche de recouvrement sur des parois de rainures d'une bande de roulement d'un pneumatique.

DEFINITIONS

Par « pneumatique », on entend tous les types de bandages élastiques soumis à une pression interne ou non.

Par « ébauche crue » d'un pneumatique, on entend une superposition d'une pluralité de produits semi-finis caoutchouteux présents sous forme de bandelettes ou de feuilles, renforcées ou non. L'ébauche crue est destinée à être vulcanisée dans un moule pour obtenir le pneumatique.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « surface de roulement », on entend la surface formée par les points de la bande de roulement du pneumatique qui entrent en contact avec la chaussée lorsque le pneumatique roule.

Par « moule », on entend un ensemble d'éléments moulants séparés qui, par rapprochement relatif, permettent de délimiter un espace de moulage toroïdal.

Par « élément moulant » d'un moule, on entend une partie d'un moule. Un élément moulant est par exemple un segment de moule.

Par « surface de moulage » d'un élément moulant, on entend la surface du moule destinée à mouler la surface de la bande de roulement du pneumatique.

Par « lame » d'un élément moulant, on entend une protubérance faisant saillie à partir de la surface de moulage. Parmi les lames, on distingue des lamelles comportant une largeur inférieure à 2 mm et des cordons comportant une largeur supérieure ou égale à 2 mm. Les lamelles sont destinées à mouler des incisions dans la bande de roulement du pneumatique, c'est-à-dire des découpures qui se ferment au moins en partie dans l'aire de contact du pneumatique avec le sol. Les cordons sont destinés à mouler des rainures dans la bande de roulement, c'est-à-dire des découpures qui ne ferment pas dans l'aire de contact du pneumatique avec le sol.

Par « lame comportant une extrémité arrondi », on entend que l'extrémité de la lame est bombée.

Par « hauteur de la lame », on entend la distance entre la surface de moulage du moule et l'extrémité de la lame.

Par « angle aigu », on entend un angle inférieur à 90°.

RESUME DE L'INVENTION

L'invention concerne un élément moulant d'un moule pour le moulage et la vulcanisation d'une bande de roulement d'un pneumatique. Comme défini dans la revendication 1, Cette bande de roulement comprend une surface de roulement destinée à venir en contact avec un sol au cours d'un roulage de ce pneumatique. Cet élément moulant comporte une surface de moulage destinée à mouler une partie de la surface de roulement du pneumatique et une lame de longueur L et de hauteur Hc destinée à mouler une incision ou une rainure dans la bande de roulement, la lame comportant une extrémité arrondie s'étendant dans la longueur de la lame selon une direction d'extension X. L'élément moulant comprend deux moyens de découpe disposés de part et d'autre de la lame à une certaine distance de cette lame. Chaque moyen de découpe comporte à une extrémité une alternance de sommets et de creux s'étendant selon cette direction d'extension X. La distance de ces sommets par rapport à la surface de moulage est supérieure ou égale à la hauteur Hc de la lame.

Les moyens de découpe sont aptes à découper une couche de recouvrement recouvrant une ébauche crue. La lame va quant à elle mouler une découpure dans la bande de roulement et va en même temps guider une partie du matériau constituant la couche de recouvrement dans la découpure ainsi moulée.Des formes préférentielles de invention sont définies dans les revendications dépendantes.

Dans une variante de réalisation, les sommets du moyen de découpe sont pointus.

On favorise encore plus le découpage de la couche de recouvrement.

Dans un mode de réalisation préférentiel, la distance entre deux sommets adjacents est comprise entre 3 et 4 mm.

On s'assure ainsi que la distance entre deux sommets n'est pas trop importante de sorte à favoriser le découpage de la couche de recouvrement.

Dans un mode de réalisation préférentiel, les sommets sont affûtés, chaque sommet formant ainsi un angle aigu $\alpha$ dans un plan de coupe perpendiculaire à la direction d'extension X.

On améliore en conséquence le découpage de la couche de recouvrement.

Dans une variante de réalisation, les creux sont arrondis.

On évite ainsi la présence de pointes de gomme sur la partie de la bande de roulement du pneumatique moulée et vulcanisée par l'élément moulant. Ces pointes de gomme pouvant être des zones d'amorce de fissures dans la bande de roulement.

Dans une variante de réalisation, au moins une partie des creux se prolongent dans la profondeur du moyen de découpe.

En plus des découpures moulées par les lames, la bande de roulement comprend des découpures moulées par les moyens de découpe. En prévoyant un prolongement de tout ou partie des creux dans un moyen de découpe, on vient générer un ou plusieurs ponts de gomme entre deux parois d'une découpure moulée par le moyen de découpe. On limite ainsi les pertes de rigidité dans la bande de roulement.

Dans une variante de réalisation, dans un plan de coupe perpendiculaire à la direction d'extension, la lame a un profil de longueur Lp présentant une symétrie selon un axe de symétrie perpendiculaire à la surface de moulage, cet axe de symétrie intersectant le profil de la lame au niveau du bord de cette lame pour définir deux sous-profils caractérisé en ce que pour chaque moyen de découpe, la distance entre un sommet de ce moyen de coupe et l'axe de symétrie du profil est inférieure ou égale à la longueur du sous-profil adjacent à ce moyen de coupe.

En maîtrisant la disposition des moyens de découpe par rapport à la lame, on s'assure de limiter la présence de matériau appartenant à la couche de recouvrement sur la surface de la bande de roulement, une grande partie de ce matériau se retrouvant dans la découpure. On améliore en conséquence l'esthétique globale du pneumatique, le matériau appartenant à la couche de recouvrement pouvant avoir une couleur et une texture différente du matériau caoutchoutique constituant la bande de roulement.

Dans une variante de réalisation, le moyen de découpe comporte au moins deux branches, chaque branche présentant une alternance de sommets et de creux.

Comme il a déjà été précisé, chaque moyen de découpe laisse une découpure dans la bande de roulement. Cette découpure vient s'ajouter à la découpure formée par la lame. Les moyens de découpe viennent ainsi augmenter le taux d'entaillement sur la surface de la bande de roulement. En prévoyant des moyens de découpe comportant deux alternances de sommets et de creux, on peut venir placer du matériau appartenant à la couche de recouvrement dans deux découpures moulées par deux lames adjacentes et ceci sans augmenter le taux d'entaillement sur la surface de la bande de roulement.

Dans une variante de réalisation, le moyen de découpe a la largeur d'un cordon, ce moyen de découpe présentant sur une extrémité au moins deux alternances de sommets et de creux distantes l'une de l'autre.

Une partie de la couche de recouvrement va être découpée par les deux alternances de sommets et de creux et entraînée dans la profondeur de l'ébauche crue par le moyen de découpe. Une fois vulcanisée, cette partie de couche de recouvrement va recouvrir le fond d'une rainure moulée par le moyen de découpe. Ainsi, en choisissant un matériau adéquat pour la couche de recouvrement, on peut favoriser l'écoulement de l'eau dans la rainure et améliorer en conséquence le comportement du pneumatique sur un sol mouillé.

Un autre objet de l'invention concerne un moule pour le moulage et la vulcanisation d'une bande de roulement d'un pneumatique, ce moule comportant une pluralité d'éléments moulants tels que décrits ci-dessus.

BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :

- la **figure 1** représente schématiquement une vue en perspective d'une partie d'un élément moulant conforme à l'invention ;

- la **figure 2** représente une vue en coupe d'un moyen de découpe d'un élément moulant, selon un second mode de réalisation ;

- la **figure 3** représente un moyen de découpe d'un élément moulant, selon un troisième mode de réalisation ;

- la **figure 4a** illustre une première étape de moulage par l'élément moulant de la **figure 1,** dans laquelle les moyens de découpe sont en contact au niveau de leur extrémité avec la couche de recouvrement recouvrant l'ébauche crue ;

- la **figure 4b** illustre une seconde étape de moulage dans laquelle la lame est en contact avec la couche de recouvrement ;

- la **figure 4c** illustre une troisième étape de moulage dans laquelle les moyens de découpe et la lame sont entièrement positionnés dans l'ébauche crue ;

- la **figure 4d** représente schématiquement une partie de la bande de roulement d'un pneumatique suite aux étapes de moulage des **figures 4a-4c ;**

- la **figure 5** est une vue en perspective d'un moyen de découpe d'un élément moulant, selon un quatrième mode de réalisation ;

- la **figure 6** est une vue en perspective d'un moyen de découpe d'un élément moulant, selon un cinquième mode de réalisation.

Dans la description qui va suivre, des éléments sensiblement identiques ou similaires seront désignés par des références identiques.

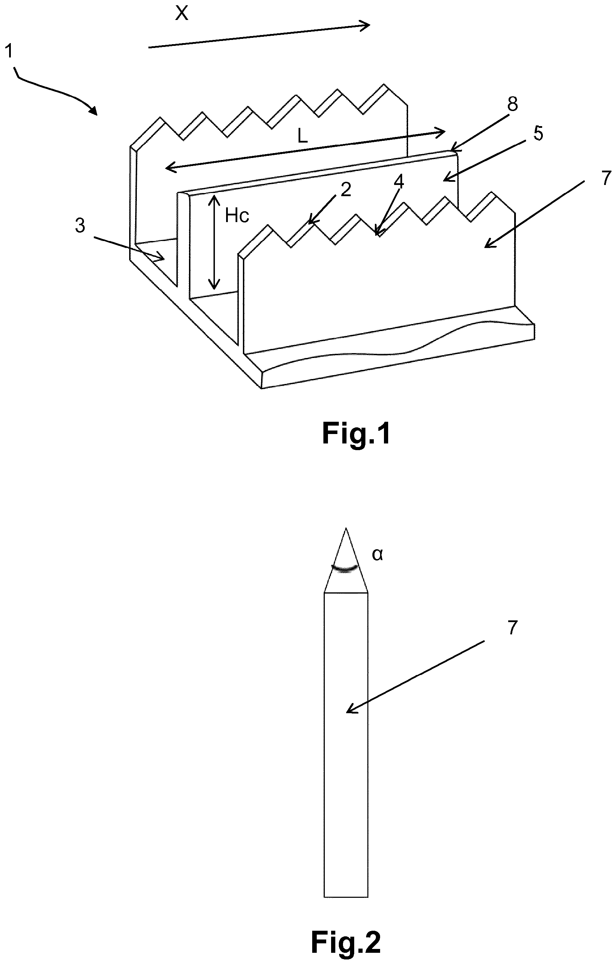

La **figure 1** représente un élément moulant 1 conforme à l'invention.

Plus particulièrement, l'élément moulant 1 comprend une surface de moulage 3 destinée à mouler une partie de la surface de roulement d'un pneumatique. L'élément moulant 1 comporte également des lames 5 de longueur L et de hauteur Hc, dont une seule est ici représentée pour faciliter la compréhension de l'invention. La lame est ici un cordon 5 destiné à mouler une rainure dans la bande de roulement du pneumatique. Par « rainure » dans une bande de roulement, on entend une découpure dans cette bande dont la largeur, c'est-à-dire la distance séparant deux parois latérales de cette rainure, est supérieure à 2 mm. Le cordon 5 s'étend en hauteur à partir de cette surface de moulage 3. Le cordon 5 s'étend également en longueur selon une direction d'extension X en faisant saillie à partir de la surface de moulage 3. Dans le moule, cette direction peut être une direction circonférentielle qui suit la circonférence du moule. En variante, la direction d'extension est une direction transversale perpendiculaire à la direction circonférentielle du moule. Dans une autre variante, cette direction d'extension est une direction oblique formant un angle non nul avec la direction circonférentielle et la direction transversale du moule.

On notera que la lame 5 présente ici une extrémité 8 arrondie.

L'élément moulant 1 de la **figure 1** comprend également deux moyens de découpe 7 disposés de part et d'autre de la lame 5 à une certaine distance de cette lame. Ces moyens de découpe s'étendent dans leur longueur selon une direction parallèle à la direction X du cordon 5. Par « direction parallèle », on entend que la direction d'extension des moyens de découpe forme un angle compris entre -5° et +5° avec la direction d'extension X du cordon. La hauteur Hlc des moyens de découpe est au moins égale à la hauteur Hc du cordon.

Chaque moyen de découpe 7 comporte à une extrémité une alternance de sommets 2 et de creux 4 s'étendant selon la direction d'extension X.

On notera que la distance des sommets 2 par rapport à la surface de moulage 3 est supérieure ou égale à la hauteur Hc de la lame.

Dans l'exemple de réalisation illustré dans la **figure 1,** les sommets 2 sont pointus. En variante, ces sommets peuvent avoir une forme différente. Par exemple, ces sommets peuvent être arrondis.

On notera également que la distance entre deux sommets 2 adjacents est limitée. Par exemple, cette distance est comprise entre 3 et 4 mm.

La **figure 2** représente une vue en coupe d'une variante d'un moyen de découpe 7 dans un plan de coupe perpendiculaire à la direction d'extension X. Dans cette vue, le sommet 2 est affuté de sorte qu'il forme un angle $\alpha$ aigu, c'est-à-dire un angle inférieur à 90°. Dans un mode de réalisation préférentiel, l'angle $\alpha$ est inférieur ou égal à 60°. En variante, l'angle $\alpha$ est inférieur ou égal à 35°.

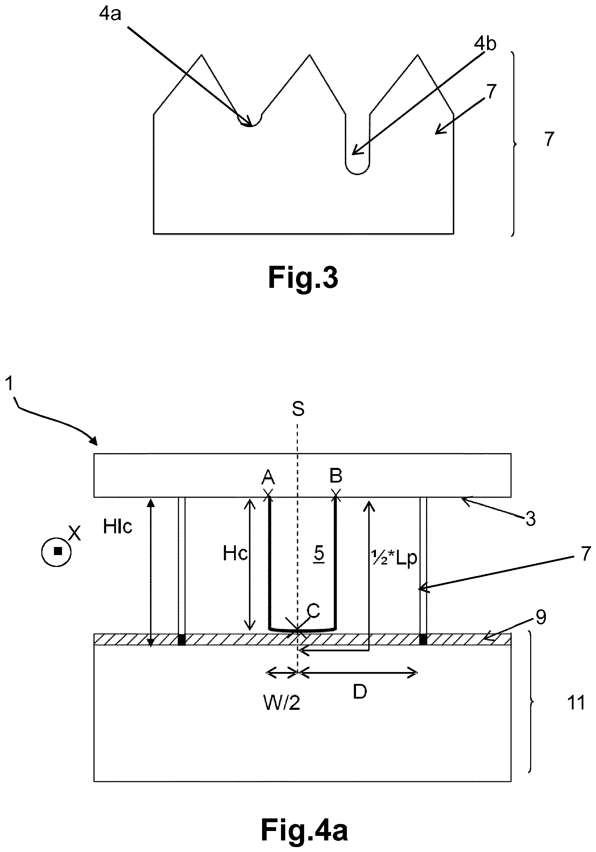

La **figure 3** représente un moyen de découpe selon un troisième mode de réalisation. Dans ce mode de réalisation, les creux 4a, 4b sont arrondis. Certains creux 4b se prolongent également dans la profondeur du moyen de découpe 7.

Les **figures 4a** à **4d** illustrent les différentes étapes de moulage d'une bande de roulement d'un pneumatique par l'élément moulant de la **figure 1.**

Plus particulièrement la **figure 4a,** représente l'élément moulant dans un plan de coupe perpendiculaire à la direction d'extension X. Dans ce plan de coupe, le cordon 5 présente une section ayant une symétrie par rapport à un axe de symétrie S. Cet axe de symétrie S s'étend ici dans la hauteur Hc du cordon et il sépare ce cordon 5 en deux demi-cordons de largeur W/2.

La section du cordon a ici une forme globalement rectangulaire avec des zones de raccord entre les faces latérales du cordon et la face supérieure de ce cordon arrondies.

Dans des variantes de réalisation complémentaires, la section du cordon peut prendre une autre forme qu'une forme rectangulaire, telle qu'une forme carrée, une forme triangulaire, etc...

On notera également que la section du cordon 5 présente, entre deux points d'intersection A et B du cordon 5 avec la surface de moulage 3, un profil représenté en traits gras sur la **figure 4a**. Ce profil a une longueur de profil Lp telle que Lp=2*(Hc+W/2), c'est-à-dire que la longueur de profil Lp correspond à deux fois la hauteur Hc du cordon 5 auquel on ajoute la largeur W de ce cordon.

Dans l'exemple de la **figure 4a,** les points d'intersection A et B sont facilement déterminables, les parois latérales du cordon 5 étant perpendiculaires à la surface de moulage 3. En variante, dans le cas où les parois latérales du cordon sont raccordées à la surface de moulage 3 par deux zones de raccordement arrondies formant deux arcs de cercle, les points d'intersection A et B correspondent respectivement à l'intersection des arcs de cercle avec des droites passant par les centres des arcs de cercle et séparant ces arcs en deux ½ arcs identiques.

Les sommets des moyens de découpe 7 sont aptes à découper une couche de recouvrement couvrant une ébauche crue 11 d'un pneumatique.

On notera que pour faciliter cette découpe, les sommets peuvent avoir été préalablement durcis pour améliorer la tenue mécanique des moyens de découpe. Par exemple, ces sommets peuvent avoir été durcis lors d'un traitement thermique particulier. En variante, il est possible de prévoir que le matériau constituant ces sommets soit plus résistant que le reste de l'élément moulant.

On notera également que les moyens de découpe 7 sont disposés dans l'élément moulant 1 de sorte que la distance D entre ces moyens de découpe et l'axe de symétrie S de la section du cordon 5 est inférieure ou égale à la moitié de la longueur Lp du profil de la section, telle que D=Hc+W/2. Dit autrement, l'axe de symétrie S intersecte le profil du cordon 5 en un point C pour définir deux sous-profils. Un premier sous-profil correspond au segment A-C et un second sous-profil correspond au segment B-C. Pour chaque moyen de coupe, la distance entre un sommet de ce moyen de coupe dans le plan de la figure **4a** et l'axe de symétrie S est inférieure ou égale à la longueur du sous-profil adjacent à ce moyen de coupe, c'est-à-dire le sous-profil appartenant au demi-cordon le plus proche du moyen de coupe. Dans l'exemple de la **figure 4a,** le sous-profil le plus proche du moyen de coupe 7 est le sous-profil correspondant au segment B-C.

La **figure 4a** divulgue une première étape dans laquelle l'élément moulant 1 et l'ébauche crue 9 se rapprochent. Ce rapprochement, est par exemple, initié par une membrane (non représentée) dans le moule. Cette membrane sous l'action d'une quantité de vapeur mise sous pression se gonfle et vient repousser l'ébauche crue vers l'élément moulant 1. Plus particulièrement, la **figure 4a** présente l'instant où les moyens de découpe 7 viennent découper la couche de recouvrement 9. Cette étape de découpe est facilitée par l'action des sommets des moyens de découpe.

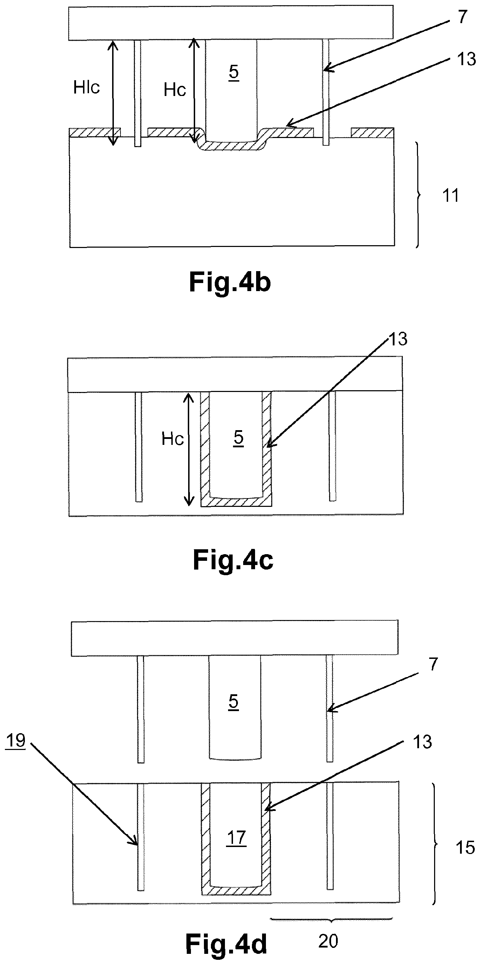

La **figure 4b** illustre une seconde étape dans laquelle le cordon 5 vient enfoncer l'ébauche crue 11. Plus particulièrement, dans cette étape le cordon 5 vient en contact contre une partie découpée 13 de la couche de recouvrement. Le cordon 5 vient ainsi entraîner cette partie 13 dans la profondeur de l'ébauche crue 11.

On notera ici que la hauteur Hlc des moyens de découpe 7 est supérieure à la hauteur Hc du cordon 5. Ainsi l'étape de découpe de la **figure 4a** est antérieure à l'étape d'enfoncement de l'ébauche crue 11 par le cordon 5. En variante, il est possible de prévoir que la hauteur Hlc des moyens de découpe 7 soit identique à la hauteur Hc du cordon 5. Dans ce cas l'étape de la **figure 4a** et l'étape de la **figure 4b** ont lieu au même instant.

La **figure 4c** illustre une troisième étape dans laquelle le cordon 5 vient enfoncer l'ébauche crue sur toute sa hauteur Hc. L'ensemble de la partie découpée 13 de la couche de recouvrement se retrouve alors dans l'ébauche crue. Une fois cette étape réalisée, il est alors possible de réaliser la vulcanisation de l'ébauche crue, c'est-à-dire le passage de l'état plastique à l'état élastique du matériau caoutchoutique constituant l'ébauche crue. Cette étape de vulcanisation peut modifier également la structure interne de la couche de recouvrement.

La **figure 4d** représente le résultat des différentes étapes de moulage et de vulcanisation de l'ébauche crue illustrée aux **figures 4a** à **4c**. La partie de la bande de roulement 15 ainsi obtenue comprend une rainure 17 obtenue par un moulage de caoutchouc autour du cordon 5 et deux incisions 19 obtenues par un moulage de caoutchouc autour des deux moyens de découpe 7. On notera ici que l'ensemble des parois de la rainure, c'est-à-dire les parois latérales et la paroi de fond encadrée par les parois latérales, sont recouvertes par la partie découpée 13 de la couche de recouvrement.

En fonction du type de matériau constituant la couche de recouvrement, on peut donner au bloc 20 délimité en partie par la rainure 17 des propriétés spécifiques. Ainsi, dans le cas où on cherche à améliorer les performances d'adhérence de la bande de roulement sur neige, on peut utiliser un matériau de recouvrement présentant un module dynamique de cisaillement G* soumis à une contrainte maximale alternée de 0,7 MPa, à une fréquence de 10 Hz et à une température de -10°C supérieur à 60 MPa, de préférence supérieur à 200 MPa.

Dans le présent document, les termes « module élastique G' » et « module visqueux G" » désignent des propriétés dynamiques bien connues de l'homme du métier. Ces propriétés sont mesurées sur un viscoanalyseur de type Metravib VA4000 sur des éprouvettes moulées à partir de compositions crues. Des éprouvettes telles que celles décrites dans la norme ASTM D 5992 - 96 (version publiée en Septembre 2006, initialement approuvée en 1996) à la figure X2.1 (mode de réalisation circulaire) sont utilisées. Le diamètre de l'éprouvette est de 10 mm (elle a donc une section circulaire de 78.5 mm$^2$), l'épaisseur de chacune des portions de composition caoutchouteuse est de 2 mm, ce qui donne un ratio « diamètre sur épaisseur » de 5 (contrairement à la norme ISO 2856, mentionnée dans la norme ASTM, paragraphe X2.4, qui préconise une valeur d/L de 2). On enregistre la réponse d'un échantillon de composition caoutchouteuse vulcanisée soumis à une sollicitation sinusoïdale en cisaillement simple alterné, à la fréquence de 10 Hz. L'éprouvette est sollicitée en cisaillement sinusoïdal à 10 Hz, à contrainte imposée (0.7 MPa), symétriquement autour de sa position d'équilibre. La mesure est réalisée au cours d'une rampe de température croissante de 1,5°C par minute, depuis une température Tmin inférieure à la température de transition vitreuse (Tg) du matériau, jusqu'à une température Tmax qui peut correspondre au plateau caoutchoutique du matériau. Avant de commencer le balayage, on stabilise la l'échantillon à la température Tmin pendant 20 min pour avoir une température homogène au sein de l'échantillon. Le résultat exploité est le module élastique de cisaillement dynamique (G') et le module visqueux de cisaillement (G") aux températures choisies (en l'occurrence, 0°, 5° et 20°C). Le « module complexe » G* se définit comme la valeur absolue de la somme complexe des modules élastique G' et visqueux G" : $G^{*} = \sqrt{(G'^{2} + G''^{2})}$ .

Dans une variante de réalisation, le matériau élastomère de la couche de recouvrement comprend une composition à base d'au moins un élastomère diénique très fortement chargé en souffre, tel que de l'ébonite.

Dans une autre variante de réalisation, la couche de recouvrement comprend un assemblage de fibres, par exemple un assemblage tridimensionnel de fibres formant un feutre. Les fibres de ce feutre peuvent être choisies dans le groupe des fibres textiles, des fibres minérales et de leur mélange. On notera également que les fibres de ce feutre peuvent être choisies parmi des fibres textiles d'origine naturelle, par exemple, dans le groupe des fibres de soie, de coton, de bambou, de cellulose, de laine et de leurs mélanges.

Dans une autre variante de réalisation, le matériau élastomère de la couche de recouvrement comprend une composition à base d'au moins un polymère thermoplastique, tel que du polyéthylène téréphtalate (PET). Un tel polymère peut présenter un module de Young supérieur à 1 GPa.

On notera que la couche de recouvrement peut être monocouche. En variante, la couche de recouvrement peut comprendre plusieurs couches de compositions différentes. Par exemple, le matériau constituant la partie inférieure de la couche de recouvrement en contact avec l'ébauche crue peut être sélectionné de sorte à améliorer le glissement de la couche de recouvrement sur l'ébauche crue lorsque le cordon entraîne cette couche de recouvrement dans la profondeur de l'ébauche. Le matériau constituant la couche inférieure peut être, par exemple, du coton ou du caoutchouc pré-vulcanisé. De la même manière, le matériau constituant la partie supérieure de la couche de recouvrement est sélectionné pour les propriétés que l'on souhaite donner à la bande de roulement, par exemple une meilleure adhérence sur un sol enneigé.

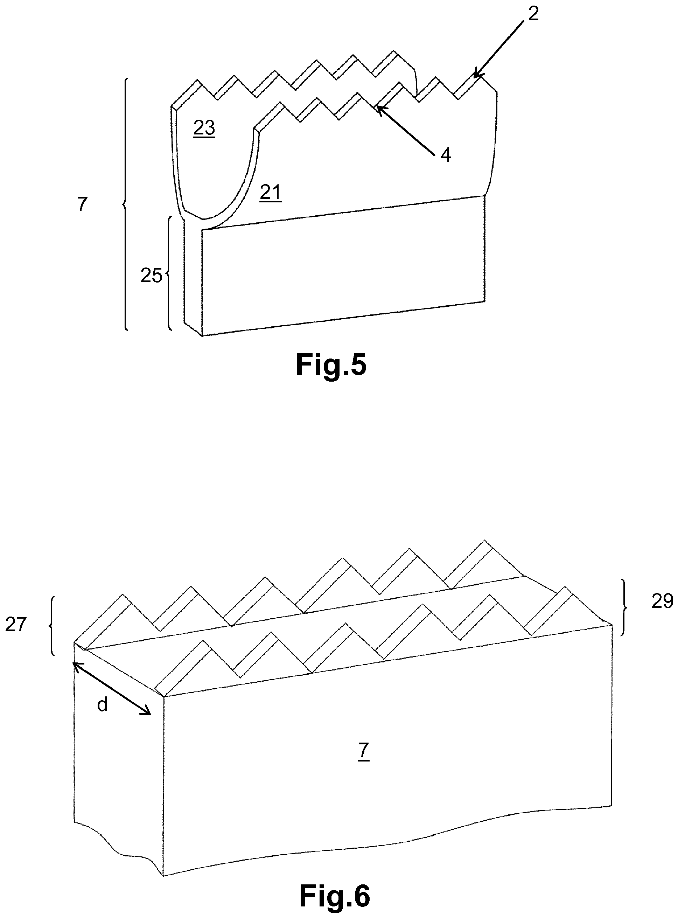

La **figure 5** présente une variante d'un moyen de découpe 7 dans laquelle ce moyen de découpe comporte au moins deux branches 21, 23. Chaque branche comporte une alternance de sommets 2 et de creux 3. Les branches sont ici curvilignes et se rejoignent au niveau d'un tronc 25. En variantes, les branches peuvent être rectilignes.

La **figure 6** présente une autre variante d'un moyen de découpe 7 dans laquelle ce moyen de découpe a la largeur d'un cordon. Ce cordon comporte sur une extrémité deux alternances 27, 29 de sommets et de creux. Ces alternances sont distantes d'une distance d.

L'invention couvre également un moule comportant une pluralité d'éléments moulants tels que décrits dans les différentes variantes ci-dessus.

L'invention n'est pas limitée aux exemples décrits et représentés et diverses modifications peuvent y être apportées sans sortir de son cadre.

Par exemple, le cordon de la **figure 1** peut présenter une toute autre forme qu'une forme rectangulaire, telle qu'une forme hexagonale, triangulaire, en losange ou autres.

Dans une autre variante de réalisation, il est possible de prévoir que la lame possède les dimensions d'une lamelle se terminant à son extrémité par un renflement.

Toutes les combinaisons entre les formes des moyens de découpe et les formes des lames sont possibles.

Dans une autre variante de réalisation, la lame présente une symétrie partielle. Par exemple, la lame comporte un ½ renflement au niveau de son extrémité créant une dissymétrie. Dans ce cadre, il est possible de déterminer un axe de symétrie pour la partie symétrique de la lame. Il est alors possible également de définir deux sous-profils par l'intersection de l'axe de symétrie avec le profil de la lame. Du fait de la dissymétrie au niveau de l'extrémité de la lame, ces deux sous-profils présentent des longueurs différentes.

**Revendications**

1. Elément moulant d'un moule pour le moulage et la vulcanisation d'une bande de roulement d'un pneumatique, cette bande de roulement comprenant une surface de roulement destinée à venir en contact avec un sol au cours d'un roulage de ce pneumatique, cet élément moulant (1) comportant une surface de moulage (3) destinée à mouler une partie de la surface de roulement du pneumatique et une lame (5) de longueur L et de hauteur Hc destinée à mouler une incision ou une rainure dans la bande de roulement, cette lame comportant une extrémité arrondie (8) s'étendant dans la longueur de la lame selon une direction d'extension X **caractérisé en ce que** l'élément moulant comprend deux moyens de découpe (7) disposés de part et d'autre de la lame à une certaine distance de cette lame et **en ce que** chaque moyen de découpe comporte à une extrémité une alternance de sommets (2) et de creux (4 ; 4a, 4b) s'étendant selon cette direction d'extension X, la distance de ces sommets par rapport à la surface de moulage (3) étant supérieure ou égale à la hauteur Hc de la lame.

2. Elément moulant selon la revendication 1, **caractérisé en ce que** les sommets (2) du moyen de découpe sont pointus.

3. Elément moulant selon l'une quelconque des revendications 1 ou 2, **caractérisé en ce que** la distance entre deux sommets adjacents est comprise entre 3 et 4 mm.

4. Elément moulant selon l'une quelconque des revendications 1 à 3, **caractérisé en ce que** les sommets sont affutés, chaque sommet formant ainsi un angle aigu $\alpha$ dans un plan de coupe perpendiculaire à la direction d'extension X.

5. Elément moulant selon l'une quelconque des revendications 1 à 4, **caractérisé en ce que** les creux (4a, 4b) sont arrondis.

6. Elément moulant selon l'une quelconque des revendications 1 à 5, **caractérisé en ce que** au moins une partie des creux se prolongent dans la profondeur du moyen de découpe.

7. Elément moulant selon l'une quelconque des revendications 1 à 6, dans lequel dans un plan de coupe perpendiculaire à la direction d'extension X, la lame a un profil de longueur Lp présentant une symétrie selon un axe de symétrie (S) perpendiculaire à la surface de moulage (3), cet axe de symétrie intersectant le profil de la lame au niveau du bord de cette lame pour définir deux sous-profils (A-C, B-C) **caractérisé en ce que** pour chaque moyen de découpe (7), la distance (D) entre un sommet de ce moyen de coupe et l'axe de symétrie du profil est inférieure ou égale à la longueur (1/2*Lp) du sous-profil adjacent à ce moyen de coupe.

8. Elément moulant selon l'une quelconque des revendications 1 à 7, **caractérisé en ce que** le moyen de découpe comporte au moins deux branches, chaque branche présentant une alternance de sommets (2) et de creux (4).

9. Elément moulant selon l'une quelconque des revendications 1 à 8, **caractérisé en ce que** le moyen de découpe a la largeur d'un cordon, ce moyen de découpe présentant sur une extrémité au moins deux alternances (27, 29) de sommets et de creux distantes l'une de l'autre.

10. Moule pour le moulage et la vulcanisation d'une bande de roulement d'un pneumatique, ce moule comportant une pluralité d'éléments moulants selon l'une quelconque des revendications 1 à 9.

**Patentansprüche**

1. Formelement für eine Form zum Formen und Vulkanisieren eines Laufstreifens eines Luftreifens, wobei dieser Laufstreifen eine Laufoberfläche aufweist, die dazu bestimmt ist, während des Rollens dieses Luftreifens mit einem Boden in Kontakt zu gelangen, wobei dieses Formelement (1) eine Formoberfläche (3), die dazu bestimmt ist, einen Teil der Laufoberfläche des Luftreifens zu formen, und eine Lamelle (5) mit Länge L und Höhe Hc, die dazu bestimmt ist, in dem Laufstreifen einen Einschnitt oder eine Rille zu formen, aufweist, wobei diese Lamelle ein abgerundetes Ende (8) aufweist, das sich in Längsrichtung der Lamelle längs einer Erstreckungsrichtung X erstreckt, **dadurch gekennzeichnet, dass** das Formelement zwei Schneidmittel (7) umfasst, die beiderseits der Lamelle in einem bestimmten Abstand von dieser Lamelle angeordnet sind, und dass jedes Schneidmittel an einem Ende abwechselnd Scheitel (2) und Vertiefungen (4; 4a; 4b) aufweist, die sich in dieser Erstreckungsrichtung X erstrecken, wobei der Abstand dieser Scheitel zu der Formoberfläche (3) größer oder gleich der Höhe Hc der Lamelle ist.

2. Formelement nach Anspruch 1, **dadurch gekennzeichnet, dass** die Scheitel (2) der Schneidmittel spitzig sind.

3. Formelement nach einem der Ansprüche 1 oder 2, **dadurch gekennzeichnet, dass** der Abstand zwischen zwei benachbarten Scheiteln im Bereich von 3 bis 4 mm liegt.

**4.** Formelement nach einem der Ansprüche 1 bis 3, **dadurch gekennzeichnet, dass** die Scheitel zugeschliffen sind, so dass jeder Scheitel in einer Schnittebene senkrecht zu der Erstreckungsrichtung X einen spitzen Winkel $\alpha$ bildet.

**5.** Formelement nach einem der Ansprüche 1 bis 4, **dadurch gekennzeichnet, dass** die Vertiefungen (4a, 4b) abgerundet sind.

**6.** Formelement nach einem der Ansprüche 1 bis 5, **dadurch gekennzeichnet, dass** wenigstens ein Teil der Vertiefungen in Tiefenrichtung der Schneidmittel verlängert ist.

**7.** Formelement nach einem der Ansprüche 1 bis 6, wobei in einer Schnittebene senkrecht zu der Erstreckungsrichtung X die Lamelle ein Längsprofil Lp besitzt, das längs einer Symmetrieachse (S) senkrecht zu der Formoberfläche (3) symmetrisch ist, wobei diese Symmetrieachse das Profil der Lamelle auf Höhe des Randes dieser Lamelle schneidet, um zwei Unterprofile (A-C, B-C) zu definieren, **dadurch gekennzeichnet, dass** für jedes Schneidmittel (7) der Abstand (D) zwischen einem Scheitel dieses Schneidmittels und der Symmetrieachse des Profils kleiner oder gleich der Länge (1/2 × Lp) des Unterprofils in der Nähe dieses Schneidmittels ist.

**8.** Formelement nach einem der Ansprüche 1 bis 7, **dadurch gekennzeichnet, dass** das Schneidmittel wenigstens zwei Schenkel aufweist, wobei jeder Schenkel einen Wechsel von Scheiteln (2) und Vertiefungen (4) aufweist.

**9.** Formelement nach einem der Ansprüche 1 bis 8, **dadurch gekennzeichnet, dass** das Schneidmittel die Breite eines Wulstes hat, wobei dieses Schneidmittel an einem Ende wenigstens zwei Wechsel (27, 29) von Scheiteln und Vertiefungen, die voneinander beabstandet sind, aufweist.

**10.** Form zum Formen und Vulkanisieren eines Laufstreifens eines Luftreifens, wobei diese Form mehrere Formelemente nach einem der Ansprüche 1 bis 9 umfasst.

**Claims**

**1.** Moulding element of a mould for moulding and vulcanizing a tyre tread, this tread comprising a tread surface intended to come into contact with the ground when this tyre is running, this moulding element (1) comprising a moulding surface (3) intended to mould part of the tyre tread surface and a blade (5) of length L and of height Hc intended to mould a sipe or a groove in the tread, this blade comprising a rounded end (8) extending along the length of the blade in a direction of extension X, **characterized in that** the moulding element comprises two cutting means (7) positioned on either side of the blade at a certain distance from this blade, and **in that** each cutting means comprises, at one end, an alternation of peaks (2) and troughs (4; 4a; 4b) extending in this direction of extension X, the distance of these peaks in relation to the moulding surface (3) being greater than or equal to the height Hc of the blade.

**2.** Moulding element according to Claim 1, **characterized in that** the peaks (2) of the cutting means are pointed.

**3.** Moulding element according to either one of Claims 1 and 2, **characterized in that** the distance between two adjacent peaks is between 3 and 4 mm.

**4.** Moulding element according to any one of Claims 1 to 3, **characterized in that** the peaks are sharpened, each peak making an acute angle $\alpha$ in a plane of section perpendicular to the direction of extension X.

**5.** Moulding element according to any one of Claims 1 to 4, **characterized in that** the troughs (4a, 4b) are rounded.

**6.** Moulding element according to any one of Claims 1 to 5, **characterized in that** at least part of the troughs extend in the depth of the cutting means.

**7.** Moulding element according to any one of Claims 1 to 6, in which, in a plane of section perpendicular to the direction of extension X, the blade has a profile of length Lp exhibiting symmetry about an axis of symmetry (S) perpendicular to the moulding surface (3), this axis of symmetry intersecting the profile of the blade at the edge of this blade to define two sub-profiles (A-C, B-C), **characterized in that**, for each cutting means (7), the distance (D) between a peak of this cutting means and the axis of symmetry of the profile is less than or equal to the length (½*Lp) of the sub-profile adjacent to this cutting means.

**8.** Moulding element according to any one of Claims 1 to 7, **characterized in that** the cutting means comprises at least two branches, each branch having an alternation of peaks (2) and of troughs (4).

**9.** Moulding element according to any one of Claims 1 to 8, **characterized in that** the cutting means has the width of a rib, this cutting means having on one end at least two alternations (27, 29) of peaks and troughs which are distant from one another.

**10.** Mould for moulding and vulcanizing a tyre tread, this mould comprising a plurality of moulding elements according to any one of Claims 1 to 9.

**Fig.1**

**Fig.2**

**Fig.3**

**Fig.4a**

**Fig.4b**

**Fig.4c**

**Fig.4d**

**Fig.5**

**Fig.6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4553918 A
- US 3415923 A
- US 3432888 A
- US 3012599 A
- WO 03089257 A
- WO 2006069912 A